# EUROPÄISCHE PATENTSCHRIFT

(11) **EP 1 630 756 B1**
(45) Veröffentlichungstag und Bekanntmachung des Hinweises auf die Patenterteilung: **09.07.2008**
(21) Anmeldenummer: 05106718.9
(22) Anmeldetag: 21.07.2005
(51) Int. Cl.: G08B 5/36

(54) **Warnvorrichtung in einem Fahrzeug**
Warning device in a vehicle
Dispositif avertisseur dans un véhicule

(30) Priorität: 26.08.2004 DE 102004041239
(43) Veröffentlichungstag der Anmeldung: 01.03.2006
(73) Patentinhaber: Robert Bosch GmbH, 70442 Stuttgart (DE)
(72) Erfinder: Egelhaaf, Jan, 71229 Leonberg (DE)

(56) Entgegenhaltungen:
- US-A1- 2002 011 925
- PATENT ABSTRACTS OF JAPAN Bd. 2003, Nr. 12, 5. Dezember 2003 (2003-12-05) & JP 2003 291689 A (SOGO JIDOSHA ANZEN KOGAI GIJUTSU KENKYU KUMIAI), 15. Oktober 2003 (2003-10-15)

## Beschreibung

### Stand der Technik

Die Erfindung geht aus von einer Warnvorrichtung in einem Fahrzeug nach der Gattung des Hauptanspruchs. Es sind bereits Fahrerassistenzsysteme bekannt, die den Fahrer bei der Wahrnehmung seiner Fahraufgabe unterstützen und ihn insbesondere vor Gefahrensituationen warnen. So ist z.B. eine Spurverlassenswarnung bekannt, die den Fahrer akustisch und/oder optisch vor einem unbeabsichtigten Verlassen der von dem Fahrzeug befahrenen Fahrspur warnt, um Unfälle durch eine Unaufmerksamkeit oder durch einen Sekundenschlaf des Fahrers zu vermeiden. Die Fahrspur wird dabei z.B. über eine Videokamera erfasst und das Bild wird ausgewertet. Eine Abweichung von der Fahrspur wird durch einen Vergleich von erfassten Bilddaten der Fahrspur und der Fahrzeugposition ermittelt. Ferner ist eine automatische Geschwindigkeitsregelung im Fahrzeug bekannt, bei der ein Fahrer akustisch und/oder optisch gewarnt wird, wenn die Maximal-Verzögerung seines Fahrzeugs nicht mehr ausreicht, um den Abstand zu einem vorausfahrenden Fahrzeug einzuhalten. Der Fahrer kann nun die Geschwindigkeit des Fahrzeugs so regeln, dass er wieder einen ausreichenden Sicherheitsabstand zu dem vorausfahrenden Fahrzeug hat. Ferner kann der Fahrer auch durch ein geeignetes Fahrerassistenzsystem vor Hindernissen gewarnt werden, denen er sich während der Fahrt, insbesondere bei einem Einparkvorgang, zu sehr nähert. Hierzu sind Abstandssensoren am Fahrzeug angeordnet, die den Abstand zu den Hindernissen messen und bei einem Unterschreiten eines vorgegebenen Abstandes eine Warnung an den Fahrer ausgeben. Über die Funktion der einzelnen Fahrerassistenzsysteme und die Ausgabe der jeweiligen Warnungen kann sich der Fahrer über das Handbuch informieren, das ihm zusammen mit dem Fahrzeug übergeben wird. Im allgemeinen sind dort die Warnungen mittels Texten beschrieben oder - insofern es sich um optische Ausgaben von Warnungen handelt - im allgemeinen auch als Foto oder als Skizze dargestellt.

Aus der US 2002/0011925 A1 ist eine Anzeigevorrichtung für ein Fahrzeug bekannt, bei der in einem Head-Up-Display in der Windschutzscheibe eine Warnung derart dargestellt wird, dass die Anzeige der Warnung eine unbewusste Warnehmungsschwelle des Fahrers überschreitet, ohne dass eine bewusste Wahrnehmungsschwelle des Fahrers überschritten wird.

### Vorteile der Erfindung

Die erfmdungsgemäße Warnvorrichtung mit den Merkmalen des Hauptanspruchs hat demgegenüber den Vorteil, dass der Benutzer des Fahrzeugs die Warnungen in einem Übungsmodus erlernen kann. Er kann hierzu die Ausgabe der einzelnen Warnungen aufrufen, ohne dass für diese Warnungen eine konkrete, kritische Fahrsituation vorliegen muss. Indem der Fahrer die von der Warnvorrichtung ausgegebenen Warnungen in sicherer Umgebung testen und erleben kann, kann er im Ernstfall, wenn er tatsächlich auf eine derartige Warnung reagieren muss, schneller, zielgerichteter und damit besser reagieren. Indem die Warnungen tatsächlich ausgegeben werden, kann der Fahrer die Warnungen viel intensiver und realitätsnah im Vergleich zu einer bloßen Beschreibung in einer Bedienungsanleitung erfahren. Darüber hinaus hat die Möglichkeit zum Aufrufen und Ausgeben von Warnungen den Vorteil, dass einem potentiellen Käufer des Fahrzeugs bereits im Verkaufshaus die Warnfunktionalitäten nicht nur erklärt, sondern auch vorgeführt werden können. Denn ansonsten wäre eine Demonstration der Funktionsfähigkeit des Fahrerassistenzsystems nur dann möglich, wenn tatsächlich eine kritische Fahrzeugsituation herbeigeführt wird. Dies sollte jedoch nicht absichtlich geschehen. Durch die erfindungsgemäße Ausgabe von Warnungen kann jedoch der potentielle Käufer einen Eindruck von den Funktionalitäten des Fahrzeugs erhalten. Über eine Eingabeeinheit kann der Übungsmodus zum Aufrufen von Warnungen gestartet werden, in dem die Warnungen nach Aufruf ausgegeben werden, ohne dass tatsächlich eine Situation vorliegen muss, vor der gewarnt werden soll.

Durch die in den Unteransprüchen aufgeführten Maßnahmen sind vorteilhafte Weiterbildungen und Verbesserungen der im Hauptanspruch angegebenen Warnvorrichtung möglich. Es ist vorteilhaft, eine Anzeige vorzusehen, die dem Fahrer darstellt, dass er sich in einem Übungsmodus befindet. Er kann damit sofort zwischen einer tatsächlichen Warnung aufgrund einer Fahrzeugsituation und einer im Übungsmodus ausgegebenen Warnung unterscheiden. Ferner ist es vorteilhaft, dem Fahrer zumindest in dem Übungsmodus zu zeigen, welche Warnung gerade ausgegeben wird. Hierdurch wird ein Erlernen der entsprechenden Warnungen für den Fahrer erleichtert.

Besonders einfach kann der Übungsmodus dann aufgerufen werden, wenn eine Eingabeeinheit eine Taste zum unmittelbaren Aufrufen des Übungsmodus aufweist.

Um eine Ablenkung des Fahrers vom Fahrgeschehen durch den Übungsmodus auszuschließen, ist vorteilhaft eine Deaktivierungseinheit vorgesehen, die einen Betrieb der Warnvorrichtung nur bei einem stehenden Motor des Fahrzeugs zulässt. Ein Betrieb während der Fahrt kann somit ausgeschlossen werden. Bevorzugt übernimmt eine Recheneinheit der Warnvorrichtung die Deaktivierung.

Ferner ist es vorteilhaft, in einer Speichereinheit Daten von Fahrzeugsituationen abzulegen, so dass entsprechend der jeweiligen Fahrzeugsituation Warnungen ausgegeben werden. Bevorzugt wird hierbei dem Fahrer die aktuelle Fahrzeugsituation angezeigt. Auch hierdurch wird ein Erlernen vereinfacht, da der Fahrer nicht nur abstrakt die Warnung und gegebenenfalls eine Bezeichnung der Warnung wahrnimmt, sondern ihm auch eine konkrete Fahrzeugsituation, in der diese Warnung ausgegeben wird, angegeben werden kann.

Bevorzugt erfolgt eine Auswahl einer Warnung durch eine Auswahl, gegebenenfalls auch durch eine Auswahl und eine anschließende Bestätigung, aus einem Auswahlmenü. In einer weiteren oder alternativen Betriebsart können auch verschiedene Warnungen nach Aufruf in einer festgelegten Abfolge ausgegeben werden, so dass dem Fahrer ein Teil des Warnprogramms oder sogar alle Warnungen dargestellt werden können, ohne dass der Fahrer eine entsprechende Auswahl treffen muss.

Besonders vorteilhaft ist die Verwendung einer erfindungsgemäßen Warnvorrichtung bzw. eines erfindungsgemäßen Verfahrens zur Warnung für Fahrerassistenzsysteme, die vor Gefahren im Fahrzeugumfeld warnen. Insbesondere hierbei gibt es mittlerweile eine Vielzahl von Systemen, so z.B. die Spurverlassenswarnung, die Abstandsmessung zur Fahrzeugseite oder die Abstandsmessung nach vorne. Ein Fahrer muss jedoch auf die unterschiedlichen Systeme entsprechend der von dem jeweiligen System ausgegebenen Warnung richtig reagieren können. Dies kann ihm nur dann gelingen, wenn er weiß, welches Fahrerassistenzsystem an ihn gerade eine Warnung ausgibt. Durch den Übungsmodus kann der Fahrer jedoch die Zuordnung einfach erlernen.

### Zeichnung

Ausführungsbeispiele der Erfindung sind in der Zeichnung dargestellt und in der nachfolgenden Beschreibung näher erläutert. Es zeigen
Figur 1 einen schematischen Aufbau einer erfindungsgemäßen Warnvorrichtung,
Figur 2 eine Anordnung einer erfindungsgemäßen Warnvorrichtung in einem Kraftfahrzeug,
Figur 3 ein erfindungsgemäßes Verfahren zur Ausgabe von Warnungen in einem Fahrzeug.

### Beschreibung des Ausführungsbeispiels

Die erfindungsgemäße Warnvorrichtung kann für beliebige Fahrzeuge verwendet werden. Insbesondere ist sie vorteilhaft einsetzbar in Kraftfahrzeugen, da hier ein Benutzer mitunter auch ein fremdes Fahrzeug steuern muss, z.B. bei einer Fahrt mit einem Mietwagen. Zudem wird auch bei einem Erwerb eines neuen Fahrzeugs die Lernfrist verkürzt, bis ein Benutzer die ihm zur Verfügung stehenden Unterstützungssysteme effektiv nutzen kann, insbesondere in kritischen Situationen. Daher wird die vorliegende Erfindung im Folgenden am Beispiel einer Verwendung in einem Kraftfahrzeug erläutert.

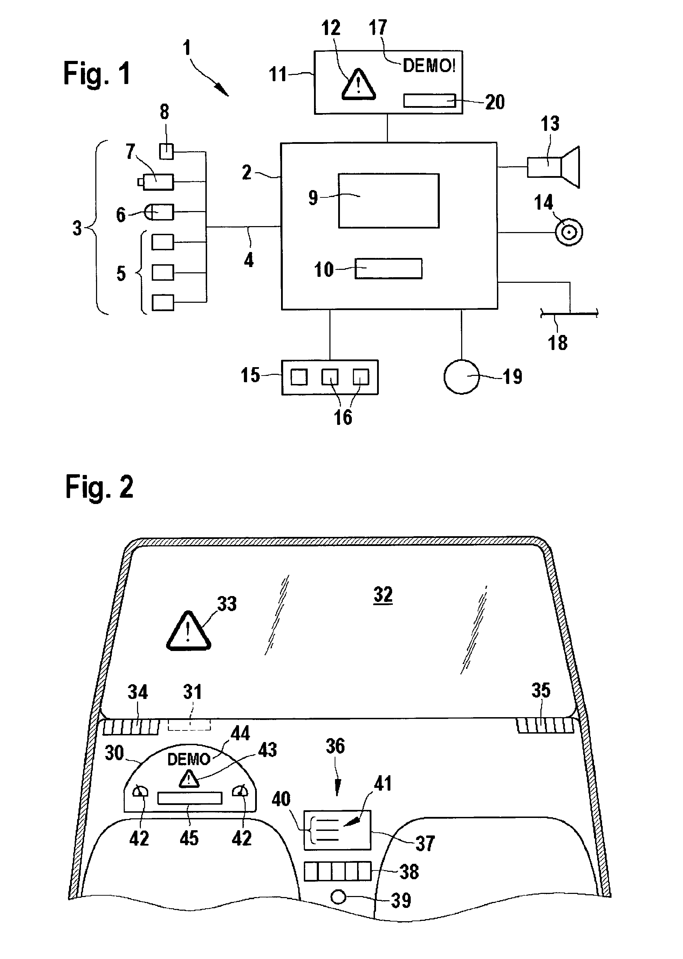

In der Figur 1 ist eine erfindungsgemäße Warnvorrichtung 1 schematisch dargestellt. Eine Zentraleinheit 2 wertet Daten aus, die insbesondere über einen Datenbus 4 von Sensoren- und Auswerteeinheiten 3 an die Zentraleinheit übermittelt werden. Die Sensoren sind z.B. Ultraschallabstandssensoren 5, wenigstens ein Radarsensor 6, eine Kamera 7 sowie ein Raddrehzahlsensor 8. Es können beliebige andere Sensoren hinzugefügt oder gegenüber den gezeigten Sensoren ausgetauscht werden. Die Zentraleinheit 2 weist eine Recheneinheit 9 auf, die die übermittelten Daten auswertet. In einer Speichereinheit 10 sind Grenzwerte für die übermittelten Daten abgelegt. Werden die Grenzwerte überschritten oder - je nach Art der Daten, z.B. bei Abstandswerten, - unterschritten, so veranlasst die Recheinheit 9 die Ausgabe einer Warnung. Eine Warnung kann z.B. über eine Anzeige 11 optisch durch die Darstellung eines Warnsymbols, durch die Anzeige von Textdaten oder sonstige optische Ausgaben, wie z.B. ein Aufblinken einer ansonsten kontinuierlichen Anzeige erfolgen. Ferner können auch Warnungen über wenigstens einen Lautsprecher 13 akustisch als Töne oder als Text ausgegeben werden. Vorzugsweise wird für die akustische Ausgabe ein Lautsprecher eines Autoradios im Fahrzeug verwendet. Ferner kann auch ein haptischer Geber, z.B. ein Erschütterungsgeber im Fahrersitz, ausgelöst werden, der bei der Ausgabe einer entsprechenden Warnung für eine Erschütterung des Fahrersitzes sorgt.

Die Zentraleinheit 2 ist ferner mit einer Eingabeeinheit 15 verbunden, die zur Steuerung der Warnvorrichtung dient. Gegebenenfalls können damit einige Warnungen deaktiviert werden, die Parameter verändert werden und die Warnvorrichtung selbst aktiviert werden. Die Eingabeeinheit 15 weist ferner eine Taste 16 auf, mit der ein Übungsmodus der Warnvorrichtung eingeschaltet werden kann. In dem Übungsmodus wird die Recheneinheit 9 dazu veranlasst, Warnungen über die Anzeige 11, den Lautsprecher 13 und/oder den haptischen Geber 14 auszugeben. Hierbei werden die Warnungen nach wenigstens einer Aufforderung durch den Fahrer ausgegeben, ohne dass eine Fahrzeugsituation vorliegt oder erfasst wird, bei der die Warnung während eines Normalbetriebs der Warnvorrichtung außerhalb des Übungsmodus ausgegeben wird.

Ist der Übungsmodus aktiviert, so wird in einer bevorzugten Ausführungsform ein Hinweis auf die Aktivierung des Übungsmodus in der Anzeige 11 ausgegeben. Z.B. kann hierzu ein Hinweistext 17, z.B. in der Textform "Demo" angezeigt werden. In einer ersten Ausführungsform können die auszugebenden Warnungen über die Eingabeeinheit 15 ausgewählt werden. Hierzu werden die Warnungen in einem Menü in der Anzeige 11 angezeigt, so dass einzelne Warnungen von dem Benutzer mit der Eingabeeinheit 15 gewählt werden können. Wird eine Warnung ausgewählt, so wird die entsprechende Warnung für einen vorgegebenen Zeitraum, z.B. für drei Sekunden, ausgegeben. Z.B. wird ein Warnsymbol 12 gezeigt. Wird keine Warnung mehr angewählt, so wird nach einer vorgegebenen Zeit, z.B. einer Minute, der Übungsmodus automatisch wieder verlassen. Ferner kann der Übungsmodus auch über die Eingabeeinheit 15, bevorzugt durch ein erneutes Drücken der Taste 16, deaktiviert werden. In einer weiteren Ausführungsform kann die Zentraleinheit 2 auch auf einen Fahrzeugdatenbus 18 zugreifen, über den ermittelt wird, wenn der Motor des Kraftfahrzeugs in Betrieb gesetzt wird. Wird der Motor aktiviert, so wird der Übungsmodus automatisch verlassen.

In einer weiteren Ausführungsform können auch verschiedene Warnungen nach Einschalten des Übungsmodus automatisch ausgegeben werden. Hierzu ist entweder in der Speichereinheit 10 oder in einer weiteren Speichereinheit 19, die mit der Zentraleinheit 2 verbindbar ist, ein Programm abgelegt, gemäß dem Warnungen nacheinander ausgegeben werden. Der Fahrer braucht so eine einzelne Warnung nicht auszuwählen, sondern wird über möglichst alle, auszugebenden Warnzustände nacheinander informiert.

Um dem Fahrer die Orientierung zu erleichtern, welche Warnung er gerade erhält, ist in der Anzeige bevorzugt ein Anzeigefeld 20 vorgesehen, in dem bevorzugt in Textform angezeigt wird, welche Warnung gerade ausgegeben wird. Damit ist eine unmittelbare Zuordnung zwischen der Warnung und dem Inhalt der Warnung möglich. Um den Fahrer bei einem Erfordernis einer tatsächlichen Warnung infolge der entsprechenden Fahrzeugsituation nicht zu irritieren, kann die Ausgabe dieser Erläuterung, welche Warnung ausgegeben wird, auf den Übungsmodus beschränkt werden.

In der Figur 2 ist eine Ansicht einer Armaturentafel und einer Windschutzscheibe in einem Fahrzeug dargestellt, wobei in die Armaturentafel eine erfindungsgemäße Warnvorrichtung integriert ist. In der vorliegenden Ausführungsform ist die Anzeige 11 in der Form von drei verschiedenen Anzeigen realisiert. Diese Anzeigen können zusammen, aber auch in einer Kombination miteinander oder jeweils alleine im Fahrzeug vorgesehen sein. Ein Kombinationsinstrument 30 ist vor dem Fahrer angeordnet. Eine Projektionseinheit 31 projiziert Licht auf die Windschutzscheibe 32, so dass ein virtuelles Bild, hier ein Warnsymbol 33, für den Fahrer sichtbar wird. Auf der linken Fahrzeugseite ist eine erste Segmentanzeige 34 und auf der rechten Fahrzeugseite ist eine zweite Segmentanzeige 35 angeordnet. Im Bereich einer Mittelkonsole 36 ist ferner eine Anzeige 37, insbesondere in Form einer Flüssigkristallanzeige vorgesehen. Unterhalb der Anzeige 37 in der Mittelkonsole 36 ist eine Eingabeeinheit 38 in Form von Drucktasten vorgesehen. In einer besonderen Ausführungsform kann statt dessen, aber auch ergänzend hierzu ein Dreh-Druck-Geber 39 vorgesehen sein, mit dem Menüpunkte durch Drehen angewählt und durch Drücken ausgewählt werden können. Die Menüpunkte 40 sind in der Anzeige 37 dargestellt und können durch Verschieben einer Anzeigemarke 41 ausgewählt werden. Das Bedienmenü weist vorzugsweise Untermenüs auf, so dass auch in einem Menü bzw. Untermenü ein Beginn des Übungsmodus ausgewählt werden kann.

Wird der Übungsmodus aktiviert, so kann der Fahrer die Warnvorrichtung zu einer Demonstration einer Ausgabe von Warnungen auffordern. Eine Auswahl erfolgt z.B. über Tasten oder über ein geeignetes Auswahlinenü. Die Auswahl kann nach Fahrzeugsituationen (z.B. zu dichter Abstand, vereiste Fahrbahn, ...) oder nach Assistenzsystemen (z.B. Spurverlassenswarnung, Abstandsmesser, ...) geordnet sein. Nach der Auswahl werden Warnungen in dem Kombinationsinstrument 30, in der Anzeige 37 in der Mittelkonsole, in den Segmentanzeigen 34, 35 und/oder in dem Head-Up-Display über die Projektionseinheit 31 ausgegeben. Neben den optischen Anzeigen können auch akustische Warnungen als Warntöne oder als gesprochener Text über den in der Figur 2 nicht gezeigten Lautsprecher ausgegeben werden. In dem Kombinationsinstrument 30 können auch weitere Anzeigen 42, die von der Warnung unabhängig sind, z.B. eine Geschwindigkeitsanzeige, vorgesehen sein. Die Warnung wird z.B. in Form eines Symbols 43 dargestellt. Bevorzugt wird durch eine Einblendung 44 darauf hingewiesen, dass sich die Warnvorrichtung in einem Übungsmodus befmdet. Welche Art der Warnung ausgegeben wird, wird in einem Anzeigefeld 45 dargestellt. In einer weiteren Ausführungsform kann dieser Hinweis auch durch eine akustische Ansage erfolgen: "Die Warnvorrichtung wurde in einen Übungsmodus geschaltet." In einer weiteren, hier nicht dargestellten Ausführungsform können Eingabeelemente auch an einem Lenkrad des Fahrzeugs angeordnet sein, so dass eine Aktivierung und/oder Steuerung des Aktivierungsmodus über diese Bedienelemente erfolgen kann.

In einer ersten Ausführungsform kann der Fahrer zwischen den möglichen Warnungen aus einer Liste auswählen. In einer weiteren, bevorzugten Ausführungsform sind die Warnungen den einzelnen Fahrerassistenzsystemen zugeordnet. Wird ein neues Fahrerassistenzsystem im Fahrzeug montiert, so können die entsprechenden Warnungen ergänzt werden. In einer weiteren Ausführungsform können dem Fahrer, z.B. in der Anzeige 37 in der Mittelkonsole 36, ergänzend zu den Warnungen, Fahrsituationen in Form von Bildern oder Filmen dargestellt werden, die zu der gerade ausgegebenen Warnung gehören. Der Fahrer kann somit nachvollziehen, in welchem Fahrzustand sich das Fahrzeug bei der Warnausgabe befinden würde, so dass er die entsprechende Warnung besser intuitiv erfassen kann.

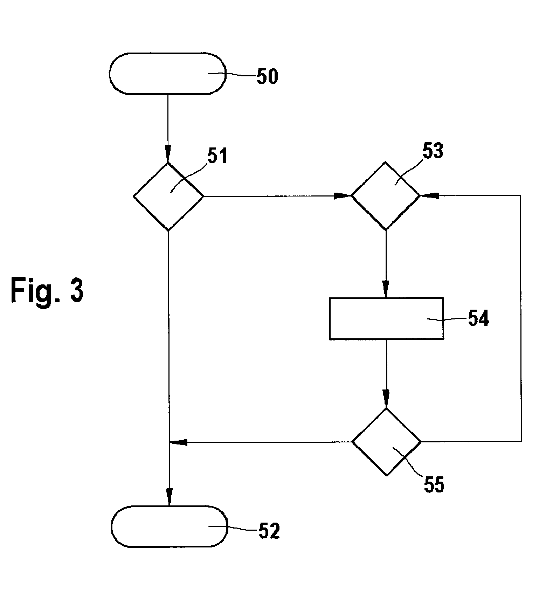

Ein Verfahren zum Betrieb einer erfindungsgemäßen Warnvorrichtung wird im Folgenden anhand der Figur 3 erläutert. Ausgehend von einem Aktivierungsschritt 50 wird der Übungsmodus der Warnvorrichtung aktiviert. Die Aktivierung des Übungsmodus kann davon abhängig gemacht werden, dass zumindest die Zündung des Fahrzeugs aktiviert wird, bzw. dass Stromverbraucher wie Radio, Kombinationsinstrument bzw. Licht mit der sogenannten "Klemme 15" (geschaltetes "Plus" hinter der Batterie) verbunden werden und aktivierbar sind. Ist der Übungsmodus eingeschaltet, so wird in einem ersten Prüfschritt 51 überprüft, ob der Fahrzeugmotor aktiviert wurde. Ist dies der Fall, so wird der Übungsmodus in einem Endschritt sofort wieder beendet. Gegebenenfalls wird geeignet, z.B. akustisch, darauf hingewiesen, dass der Übungsmodus während laufendem Motor nicht aktiviert werden kann. Ist der Motor nicht aktiviert, so wird zu einem Abfrageschritt 53 verzweigt, in dem z.B. mit einer Menüsteuerung abgefragt wird, zu welchen Informationen der Fahrer Warnungen ausgegeben erhalten will. So kann z.B. ausgegeben werden: "Wählen Sie das Fahrerassistenzsystem aus, dessen Warn-Ausgabe Sie testen wollen: 1. Einparkhilfe, 2. ACC (Geschwindigkeitsgeregeltes Folgefahren), 3. LDW (Lane Departure Warning, Spurverlassenswarnung)". Hat sich der Fahrer für eines der Fahrerassistenzsysteme entschieden, so wird zu einer Warnausgabe 54 weiterverzweigt. In einer Anzeige des Fahrzeugs, z.B. in dem Kombinationsinstrument 30, wird der beispielsweise der folgende Text ausgegeben: "Im Falle, dass das Fahrzeug droht, die Fahrspur zu verlassen, werden folgende Warnmeldungen ausgegeben". Die akustischen, optischen und/oder haptischen Warnungen, die im Falle einer Spurverlassenswarnung aktiviert werden, werden dem Fahrer bei einer akustischen Ausgabe des Hinweises auf die Warnung anschließend ausgegeben. Erfolgt eine Anzeige des Hinweises auf die Warnung, kann die Warnung auch bereits während der Anzeige dieses Hinweises erfolgen. Wählt der Fahrer das ACC-System an, so erscheint in einer Anzeige der Hinweis ,,im Falle einer Übernahmeanforderung, (die Verzögerung des ACC reicht zum rechtzeitigen Bremsen auf das Vorderfahrzeug nicht aus) würden folgende Warnungen ausgegeben". Im Kombinationsinstrument wird z.B. in diesem Fall das Warnsymbol 43 angezeigt. Zusätzlich wird ein Warnton über den oder die Lautsprecher 13 ausgegeben.

Anschließend wird zu einem dritten Prüfschritt 55 verzweigt, in dem abgefragt wird, ob der Übungsmodus fortgesetzt werden soll oder beendet werden soll. Wünscht der Fahrer Informationen zu weiteren Funktionen eines oder mehrerer Fahrerassistenzsysteme, so wird zu dem zweiten Prüfschritt 53 zurückverzweigt und der Fahrer kann erneut eine Auswahl vornehmen. Wünscht er keine Weiterverfolgung oder gibt er in einer bevorzugten Ausführungsform für einen vorgegebenen Zeitraum, z.B. eine Minute, keine neue Anforderung ein, so wird von dem dritten Prüfschritt 55 zu dem Endschritt 52 verzweigt.

Beispielsweise für die folgenden Fahrzeugsysteme könnten entsprechende Warnungen nach Aufforderung ausgegeben werden.

### ACC (Adaptive Cruise Control, geschwindigkeitsgeregeltes Folgefahren)

Bei einer zu starken Annäherung an das vordere Fahrzeug werden die folgenden Warnungen veranlasst: Einblendung eines Warnsymbols in die Windschutzscheibe, Aktivierung eines Warntons, Einblendung eines Warnsymbols in das Kombinationsinstrument. Gegebenenfalls können hierzu Symbole entsprechend einem Abstand in der Anzeige dargestellt werden. Zur Erfassung der Hindernisse vor dem Fahrzeug werden insbesondere Radarsensoren an der Fahrzeugfrontseite verwendet.

### BSD (Blind Spot Detection, Tote-Winkel-Warnung)

Hierfür werden insbesondere Sensoren an der Fahrzeugseite verwendet. Befmdet sich ein Fahrzeug im Toten Winkel, so wird insbesondere eine haptische Warnung und/oder akustische Warnungen in Form eines gut hörbaren Warntons ausgegeben.

### LCA (Lane Change Aid, Unterstützung beim Spurwechsel)

Eine Kamera überwacht den benachbarten Fahrraum. Eine Warnung wird ausgegeben, wenn sich ein Hindernis auf der Fahrspur befindet. Auch hier wird insbesondere eine haptische und/oder optische Warnung ausgegeben.

### LDW (Lane Departure Warning) und LKS (Lane Keeping Support)

Vor einem Spurverlassen bzw. bei einem nicht hinreichenden Einhalten der Fahrspur wird eine Warnung ausgegeben. Diese kann zunächst nur optisch, bei einer stärkeren Abweichung jedoch auch akustisch und/oder haptisch erfolgen.

### Parkpilot (Einparkhilfe)

Hierbei wird insbesondere eine akustische Warnung ausgegeben. Bei einer zu starken Annäherung an der linken und/oder rechten Fahrzeugseite werden insbesondere die Segmentanzeigen 34, 35 unterhalb der Windschutzscheibe 32 angesteuert.

### PSD (Park Space Detection, Parklückevermessung)

Bevorzugt über geeignete Anzeigen im Kombinationsinstrument wird ein Fahrer auf geeignete Parklücken hingewiesen. Er erhält damit bereits eine Information über die Lage und/oder die Größe der Parklücke. In diesem Zusammenhang können ihm auch Ausgaben bezüglich eines halbautomatischen Einparkverfahrens gegeben werden. Der Ausdruck Warnung ist dabei in diesem Fall nicht so zu verstehen, dass lediglich eine Gefahrenwarnung, sondern auch ein Hinweis auf eine Parklücke gegeben wird. Der Fahrer wird vor einem Vorbeifahren an einer für ein Einparken seines Fahrzeugs geeigneten Parklücke gewarnt.

Die Zuordnung zwischen den einzelnen Warnungen und dem Fahrerassistenzsystemen kann individuell vorgenommen werden. Durch die Ausgabe in dem Übungsmodus kann der Fahrer die jeweiligen, aufzunehmenden Informationen intuitiv erfassen und im Falle eines tatsächlichen Einsatzes dem jeweiligen Fahrerassistenzsystem bzw. dem Fahrzeugumfeldüberwachungssystem zuordnen, sodass er die richtigen Folgerungen und Handlungen aus den Warnungen ableiten kann.

## Patentansprüche

1. Warnvorrichtung in einem Fahrzeug mit mindestens einer Ausgabeeinheit (11, 13, 30, 33, 34, 35, 37) zur Ausgabe mindestens einer Warnung sowie mit wenigstens einer Eingabeeinheit zum Aufrufen eines Übungsmodus und zum Aufrufen von Warnungen in dem Übungsmodus, wobei die Warnungen nach einem Aufrufen ausgegeben werden.

2. Warnvorrichtung nach Anspruch 1, **gekennzeichnet durch** eine Anzeige (11, 30) zum Anzeigen des Übungsmodus der Warnvorrichtung.

3. Warnvorrichtung nach einem der vorherigen Ansprüche, **gekennzeichnet durch** eine Anzeige (11, 30, 33, 37) zum Anzeigen, auf welche Fahrsituation oder Gefahrensituation die gerade ausgegebene Warnung bezogen ist.

4. Warnvorrichtung nach einem der vorherigen Ansprüche, **dadurch gekennzeichnet, dass** die Eingabeeinheit eine Taste (16) zum Aufrufen des Übungsmodus aufweist.

5. Warnvorrichtung nach einem der vorherigen Ansprüche, **gekennzeichnet durch** eine Deaktivierungseinheit (9), die einen Betrieb der Warnvorrichtung in dem Übungsmodus nur bei einem abgeschalteten Antrieb des Fahrzeugs zulässt.

6. Warnvorrichtung nach einem der vorherigen Ansprüche, **gekennzeichnet durch** eine Speichereinheit (10, 19) zur Speicherung von Fahrzeugsituationen zur Ausgabe in dem Übungsmodus, wobei entsprechend der jeweiligen Fahrzeugsituation Warnungen ausgegeben werden.

7. Verfahren zur Ausgabe von Warnungen in einem Fahrzeug, wobei ein Übungsmodus zur Ausgabe von Warnungen gewählt wird und wobei die Warnungen in dem Übungsmodus unabhängig von einer einer jeweiligen Warnung zugrundeliegenden Fahrzeugsituation ausgegeben werden.

8. Verfahren nach Anspruch 7, **dadurch gekennzeichnet, dass** eine in dem Übungsmodus auszugebende Warnung aus einem Auswahlmenü aufgerufen wird.

9. Verfahren nach einem der Ansprüche 7-8, **dadurch gekennzeichnet, dass** in dem Übungsmodus eine gespeicherte Abfolge von Warnungen ausgegeben wird.

10. Verwendung einer Warnvorrichtung nach einem der Ansprüche 1-6 oder eines Verfahrens nach einem der Ansprüche 7-9 für ein System zur Fahrzeugumfeldwarnung in einem Fahrzeug.

## Claims

1. Warning apparatus in a vehicle having at least one output unit (11, 13, 30, 33, 34, 35, 37) for outputting at least one warning and also having at least one input unit for calling a training mode and for calling warnings in the training mode, the warnings being output following a call.

2. Warning apparatus according to Claim 1, **characterized by** an indicator (11, 30) for indicating the training mode of the warning apparatus.

3. Warning apparatus according to one of the preceding claims, **characterized by** an indicator (11, 30, 33, 37) for indicating the driving situation or danger situation to which the currently output warning refers.

4. Warning apparatus according to one of the preceding claims, **characterized in that** the input unit has a key (16) for calling the training mode.

5. Warning apparatus according to one of the preceding claims, **characterized by** a deactivation unit (9) which allows the warning apparatus to be operated in the training mode only when the vehicle's drive train is disconnected.

6. Warning apparatus according to one of the preceding claims, **characterized by** a memory unit (10, 19) for storing vehicle situations for output in the training mode, with warnings being output on the basis of the respective vehicle situation.

7. Method for outputting warnings in a vehicle, where a training mode for outputting warnings is selected and where the warnings are output in the training mode independently of a vehicle situation on which a respective warning is based.

8. Method according to Claim 7, **characterized in that** a warning to be output in the training mode is called from a selection menu.

9. Method according to one of Claims 7-8, **characterized in that** a stored sequence of warnings is output in the training mode.

10. Use of a warning apparatus according to one of Claims 1-6 or of a method according to one of Claims 7-9 for a system for vehicle environment warning in a vehicle.

## Revendications

1. Dispositif avertisseur pour un véhicule comportant au moins une unité d'émission (11, 13, 30, 33, 34, 35, 37), pour émettre au moins un avertissement ainsi qu'au moins une unité d'entrée pour appeler un mode d'exercice et pour appeler des avertissements dans le mode d'exercice, les avertissements étant émis après un appel.

2. Dispositif avertisseur selon la revendication 1,
**caractérisé par**
un affichage (11, 30) pour afficher le mode d'exercice du dispositif d'avertissement.

3. Dispositif avertisseur selon l'une quelconque des revendications précédentes,
**caractérisé par**
un affichage (11, 30, 33, 37) pour afficher la situation de conduite ou la situation de risque concernée par l'avertissement qui vient d'être émis.

4. Dispositif avertisseur selon l'une quelconque des revendications précédentes,
**caractérisé en ce que**
l'unité d'émission comporte une touche (16) pour appeler le mode d'exercice.

5. Dispositif avertisseur selon l'une quelconque des revendications précédentes,
**caractérisé par**
une unité de neutralisation (9) qui autorise le fonctionnement du dispositif d'avertissement en mode d'essai seulement lorsque le moteur du véhicule est arrêté.

6. Dispositif avertisseur selon l'une quelconque des revendications précédentes,
**caractérisé par**
une unité de mémoire (10, 19) pour mémoriser les situations du véhicule et émettre dans le mode d'exercice, des avertissements étant émis en fonction de la situation respective du véhicule.

7. Procédé d'émission d'avertissement par un véhicule selon lequel on sélectionne un mode d'exercice pour émettre des avertissements et les avertissements sont émis en mode d'exercice indépendamment de la situation du véhicule qui correspondrait à chaque avertissement.

8. Procédé selon la revendication 7,
**caractérisé en qu'**
on appelle un avertissement à émettre en mode d'exercice dans un menu de sélection.

9. Procédé selon l'une quelconque des revendications 7 et 8,
**caractérisé en que**
dans le mode d'exercice, on émet une succession mémorisée d'avertissements.

10. Utilisation d'un dispositif d'avertissement selon l'une quelconque des revendications 1 à 6 ou d'un procédé selon l'une quelconque des revendications 7 à 9 dans un système d'avertissement du champ environnant d'un véhicule.
